# EUROPÄISCHE PATENTANMELDUNG

(11) **EP 3 651 127 A1**
(43) Veröffentlichungstag der Anmeldung: **13.05.2020**
(21) Anmeldenummer: 19207472.2
(22) Anmeldetag: 06.11.2019
(51) Int. Cl.: G07D 9/00

(54) **ADAPTERMODUL FÜR EIN FAHRZEUG ZUR AKTIVIERUNG EINER SICHERHEITSRELEVANTEN FUNKTION DES FAHRZEUGES**

(30) Priorität: 06.11.2018 DE 102018127687
(71) Anmelder: Huf Hülsbeck & Fürst GmbH & Co. KG, 42551 Velbert (DE)
(72) Erfinder: Peschl, Andreas, 42555 Velbert (DE); Wickert, Pascal, 46049 Oberhausen (DE); Gabriel, Lars, 42555 Velbert (DE); Bextermöller, Hubert, 45468 Mülheim an der Ruhr (DE); Leib, Steffen, 40885 Ratingen (DE); Dementyev, Yevgen, 42287 Wuppertal (DE)
(74) Vertreter: Patentanwälte Bals & Vogel

(57) **Zusammenfassung**

Die Erfindung betrifft ein Adaptermodul (10) für ein Fahrzeug (1) zur Aktivierung einer sicherheitsrelevanten Funktion des Fahrzeuges (1), aufweisend:
- wenigstens eine Eingangseinheit (20) zum Empfang einer Authentifizierungsinformation, um zumindest teilweise einen Authentifizierungsmechanismus über eine erste Kommunikationstechnologie bereitzustellen,
- wenigstens eine Ausgangseinheit (30) zur Aussendung wenigstens eines Funksignals (200) über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren,
wobei sich die erste Kommunikationstechnologie von der zweiten Kommunikationstechnologie unterscheidet.

## Beschreibung

Die vorliegende Erfindung betrifft ein Adaptermodul für ein Fahrzeug zur Aktivierung einer sicherheitsrelevanten Funktion des Fahrzeuges nach dem unabhängigen Vorrichtungsanspruch. Ferner bezieht sich die Erfindung auf einen Türgriff, ein System sowie ein Verfahren, insbesondere zur Aktivierung der sicherheitsrelevanten Funktion nach den jeweiligen unabhängigen Ansprüchen.

Es ist aus dem Stand der Technik bekannt, dass verschiedene Schnittstellen zur Bereitstellung eines Authentifizierungsmechanismus zur Authentifikation eines Identifikationsgebers (elektronischer Schlüssel bzw. ID-Geber) bei einem Fahrzeug genutzt werden können. Unabhängig von der gewählten Art der Authentifizierung (z. B. mittels der Übertragung eines Codes) erfordert der Authentifizierungsmechanismus eine Datenübertragung über die Schnittstelle, d. h. es müssen Daten vom ID-Geber an die Fahrzeugelektronik übertragen werden. Viele Fahrzeuge nutzen hierzu RF (Radio Frequency) Schnittstellen, also ein Funksignal, um die Datenübertragung zu ermöglichen. Besonders verbreitet sind dabei LF- und HF-Schnittstellen, welche somit Funksignale im LF-Bereich (Low Frequency Bereich) bzw. HF-Bereich (High Frequency Bereich) nutzen. Andere Fahrzeuge unterstützen auch eine Datenübertragung über Bluetooth und/oder NFC (Near Field Communication), und weisen entsprechende Bluetooth- und/oder NFC-Schnittstellen auf. Weitere Lösungen nutzen ggf. auch eine Mobilfunkschnittstelle oder eine WLAN (Wireless Local Area Network) Schnittstelle.

Problematisch ist hierbei, dass an ein bestimmtes Fahrzeug angepasste ID-Geber nicht ohne Weiteres durch andere ID-Geber ersetzt werden können. Bspw. besteht der Wunsch, einen alten ID-Geber mit einem neuen zu ersetzen, weil dieser defekt ist oder weil eine modernere Kommunikationstechnologie für den Authentifizierungsmechanismus eingesetzt werden soll. Dies ist herkömmlicherweise mit hohen Kosten und einem enormen technischen Aufwand verbunden, da geeignete Schnittstellen in das Fahrzeug integriert werden müssen.

Es ist daher eine Aufgabe der vorliegenden Erfindung, die voranstehend beschriebenen Nachteile zumindest tlw. zu beheben. Insbesondere ist es Aufgabe der vorliegenden Erfindung, eine verbesserte Möglichkeit zur Nutzung einer bestimmten Kommunikationstechnologie bei einem Fahrzeug vorzuschlagen. Auch ist es eine optionale Aufgabe der Erfindung, den herkömmlichen ID-Geber für eine sicherheitsrelevante Funktion bei einem Fahrzeug zu ersetzen.

Die voranstehende Aufgabe wird gelöst durch ein Adaptermodul mit den Merkmalen des unabhängigen Vorrichtungsanspruchs, einen Türgriff mit den Merkmalen des nebengeordneten unabhängigen Vorrichtungsanspruchs, ein System mit den Merkmalen des unabhängigen Systemanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Adaptermodul beschrieben sind, selbstverständlich auch im Zusammenhang mit dem erfindungsgemäßen Türgriff, dem erfindungsgemäßen System sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch ein Adaptermodul für ein Fahrzeug zur Aktivierung einer sicherheitsrelevanten Funktion des Fahrzeuges, wobei das Adaptermodul aufweist:
- wenigstens eine (elektronische) Eingangseinheit (jeweils) zum Empfang wenigstens einer Authentifizierungsinformation, um zumindest tlw. einen Authentifizierungsmechanismus über wenigstens eine erste Kommunikationstechnologie bereitzustellen,
- wenigstens eine (elektronische) Ausgangseinheit (jeweils) zur Aussendung wenigstens eines Funksignals über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren.

Hierbei ist insbesondere vorgesehen, dass sich die wenigstens eine erste Kommunikationstechnologie von der wenigstens einen zweiten Kommunikationstechnologie unterscheidet. Dies hat den Vorteil, dass in technisch einfacher und somit kostengünstiger Weise eine Adaption des Authentifizierungsmechanismus an das Fahrzeug erfolgen kann. Da es sich hierbei ggf. um einen moderneren Authentifizierungsmechanismus handelt, welcher z. B. die erste Kommunikationstechnologie als eine solche Kommunikationstechnologie nutzt, welche moderner als die zweite Kommunikationstechnologie ist, kann ferner die Sicherheit erhöht und/oder der Komfort gesteigert werden. Insbesondere ist es daher vorgesehen, dass das Fahrzeug originär nicht die erste Kommunikationstechnologie und/oder nur die zweite Kommunikationstechnologie zur Authentifizierung eines ID-Gebers unterstützt. Bevorzugt bezieht sich dabei "moderner" darauf, dass die modernere erste Kommunikationstechnologie später entwickelt wurde als die zweite Kommunikationstechnologie. Der ID-Geber, also das mobile Kommunikationsgerät welches bspw. die Authentifizierungsinformation aussendet, kann dabei z. B. als elektronischer Schlüssel und/oder als ein Mobilfunk-Kommunikationsgerät, wie ein Smartphone, ausgebildet sein.

Gemäß der Erfindung können zum Aussenden optional auch mehrere zweite Kommunikationstechnologien unterschiedlicher Art (und unterschiedlicher Ausgangseinheiten) zumindest teilweise gleichzeitig genutzt werden, z. B. RF gemäß einer ersten zweiten Kommunikationstechnologie und UWB gemäß einer zweiten Kommunikationstechnologie.

Von Vorteil ist es bei dem erfindungsgemäßen Adaptermodul, wenn die Eingangseinheit als Schnittstelle zur kontaktlosen Energie- und/oder Datenübertragung ausgebildet ist, vorzugsweise zur induktiven Übertragung, bevorzugt zur NFC-Übertragung, sodass vorzugsweise der Authentifizierungsmechanismus den Empfang der Authentifizierungsinformation über die Datenübertragung umfasst. In anderen Worten kann der Authentifizierungsmechanismus zumindest spezifizieren, dass eine Authentifizierungsinformation über die erste Kommunikationstechnologie (z. B. NFC) übertragen wird. Alternativ oder kombinativ kann der Authentifizierungsmechanismus auch eine Spezifikation über einen vorgegebenen Inhalt der Authentifizierungsinformation, insbesondere einen Code, und/oder über eine kryptografische Funktion zur Authentifizierung und/oder dergleichen umfassen.

Das Fahrzeug ist bspw. als Kraftfahrzeug und/oder Personenkraftfahrzeug und/oder Lastkraftfahrzeug und/oder Elektrofahrzeug und/oder Hybridfahrzeug ausgebildet. Die sicherheitsrelevante Funktion kann ein Ansteuern einer Schließvorrichtung des Fahrzeuges umfassen, z. B. das Entriegeln der Schließvorrichtung, sodass ein Öffnen der Türen des Fahrzeuges ermöglicht ist. Hierbei kann ein erfindungsgemäßes Adaptermodul und/oder eine (Adapter-) Vorrichtung eines erfindungsgemäßen Verfahrens im Bereich und/oder an und/oder in einem Türgriff integriert sein, sodass die Funktion diesem Türgriff und/oder der zugehörigen Tür zugeordnet ist. Bspw. kann das Ziehen am Türgriff eine Authentifizierung auslösen, welche durch das erfindungsgemäße Adaptermodul bzw. durch die Adaptervorrichtung zumindest tlw. (teilweise) ermöglicht wird. Nach erfolgreicher Authentifizierung kann ein Schließsystem geöffnet werden, sodass sich der Türgriff zum Öffnen der Tür betätigen lässt. Gleiches kann für einen Türgriff an einer Heckklappe des Fahrzeuges gelten, sodass bspw. die Betätigung dieses Türgriffs zunächst die Authentifizierung auslöst und dann bei erfolgreicher Authentifizierung ein Öffnen der Heckklappe bewirkt. Auch ein Griff einer Heckklappe wird somit als Türgriff im Sinne der vorliegenden Erfindung verstanden.

Zur Aktivierung der sicherheitsrelevanten Funktion kann vorausgesetzt sein, dass eine Authentifizierung am Fahrzeug erfolgreich ist. Von Vorteil ist es, wenn die Authentifizierung durch eine Aktivierungshandlung eines Benutzers des Fahrzeuges aktiviert wird, wie durch eine Annäherung und/oder durch eine Geste und/oder eine Berührung und/oder eine Kraftausübung (wie ein Ziehen, z. B. eines Türgriffs). Diese Aktivierungshandlung kann z. B. zumindest tlw. durch ein Suchsystem detektiert werden. Es sind dabei unterschiedliche Verfahren zur Bereitstellung einer Authentifizierung bekannt, welche zumindest tlw. unter dem Begriff "Authentifizierungsmechanismus" gefasst werden können. Die Authentifizierung, insbesondere auch der Authentifizierungsmechanismus, umfasst vorteilhafterweise einen kryptografischen Informationsaustausch, wie ein Codeaustausch und/oder gemäß einem Challenge-Response-Verfahren. Dieser Informationsaustausch kann zwischen einem Kommunikationsgerät (wie einem ID-Geber, Smartphone oder dergleichen) und dem Fahrzeug stattfinden. Neben dem kryptografischen Informationsaustausch, also der informationstechnischen Verarbeitung, umfasst die Authentifizierung auch kommunikationstechnische Voraussetzungen, welche ggf. im Rahmen der Erfindung als "Authentifizierungsmechanismus" oder (zumindest) Teil des Authentifizierungsmechanismus verstanden werden.

Insbesondere bezieht sich dabei der Authentifizierungsmechanismus (bevorzugt ausschließlich) auf die Schnittstellenvoraussetzungen, vorzugsweise hard- und/oder softwareseitig. So kann es möglich sein, dass das Fahrzeug eine bestimmte Funkschnittstelle aufweist, um den Informationsaustausch durchzuführen. Andere Systeme basieren hingegen auf andere Funktechnologien oder auf kontaktlose Verfahren (wie NFC bzw. RFID, also "radio-frequency identification"). Es ist nun möglich, dass ein Kommunikationsgerät ein kontaktloses Verfahren zur Authentifizierung unterstützt, und das Fahrzeug lediglich die Funkschnittstelle bereitstellt. Auch ist der Wunsch denkbar, ein Fahrzeug auf einen anderen Authentifizierungsmechanismus auf- bzw. umzurüsten, also im Sinne der Erfindung von ursprünglich nur einer zweiten auf eine erste Kommunikationstechnologie, bspw. vormals nur RF-Funk auf NFC, aufzurüsten (wenn z. B. das Kommunikationsgerät nur NFC unterstützt, und das Fahrzeug nur RF-Funk unterstützt). Erfindungsgemäß kann dabei auf einfache Weise eine solche Umrüstung ermöglicht werden.

Von Vorteil ist es ferner, wenn die zweite Kommunikationstechnologie als eine Funk-Technologie ausgeführt ist, insbesondere als eine RF-Funk-Technologie (RF für "radio frequency"), vorzugsweise zur Datenübertragung über entsprechende Funksignale. Bspw. kann eine Funkfrequenz dieser zweiten Kommunikationstechnologie bzw. des Funksignals größer als 10 kHz sein. Optional kann die (RF-) Funkfrequenz eine LF-Kommunikationsfrequenz oder eine HF-Kommunikationsfrequenz sein, sodass die zweite Kommunikationstechnologie ein Funksignal über diese Kommunikationsfrequenz überträgt. So liegt eine LF-Kommunikationsfrequenz z. B. im Bereich zwischen 10 kHz (Kilohertz) bis 300 kHz. Vorteilhafterweise beträgt eine LF-Kommunikationsfrequenz 125 kHz und/oder 20 kHz. Eine HF-Kommunikationsfrequenz liegt bspw. in einem Bereich von 3 MHz bis 30 GHz, vorzugsweise 30 MHz bis 3 GHz, bevorzugt 300 MHz bis 1 GHz, und beträgt bspw. 433 MHz oder 600 MHz oder 800 MHz oder 900 MHz.

Alternativ oder zusätzlich kann die erste oder zweite Kommunikationstechnologie als eine UWB-Kommunikationstechnologie (UWB steht für Ultrabreitband) ausgeführt sein. Bevorzugt liegt hierbei eine Mittenfrequenz im UWB-Bereich bei 5 GHz und/oder eine Bandbreite der UWB-Kommunikation im Bereich von mindestens 500 MHz bis mindestens 10 GHz, vorzugsweise mindestens 1 GHz bis mindestens 8 GHz. UWB bietet aufgrund der enormen Bandbreite einen besonders hohen Schutz vor Angriffen auf die Kommunikation.

Optional kann die erste Kommunikationstechnologie als kontaktloses Verfahren zur Energie- und/oder Datenübertragung ausgeführt sein, vorzugsweise als Nahfeldkommunikation, also NFC (Near Field Communication) und/oder RFID (Radio frequency identification). Dabei kann der Datenaustausch über die induktive Kopplung zwischen zwei Induktivitäten (z. B. einerseits des Kommunikationsgeräts und andererseits der Eingangseinheit) erfolgen. Die induktive Kopplung kann dabei z. B. mit einer Frequenz von 13,56 MHz erfolgen. Als Modulation kann ferner die Amplitudenumtastung (ASK) benutzt werden. Damit ist die erste Kommunikationstechnologie energiequellenfrei ausgestaltet und erhält die notwendige Energie ausschließlich von einer externen (nicht verbundenen) Energiequelle. Hierbei kann die erste Kommunikationstechnologie über genau eine ("1") Spule oder genau ein ("1") elektrisches Bauteil zum Daten- und/oder Energieaustausch (induktive Kopplung) verfügen, wodurch sich die Anzahl der elektrischen Bauteile reduzieren lässt.

Zudem ist im Rahmen der Erfindung denkbar, dass die Eingangseinheit als NFC-Schnittstelle zur Kommunikation mit einem mobilen Kommunikationsgerät und die Ausgangseinheit als (RF-) Funkschnittstelle zur Kommunikation mit einer Fahrzeugelektronik ausgebildet ist. Vorzugsweise ist die NFC-Schnittstelle als passive NFC-Schnittstelle ausgestaltet (die ausschließlich mit Energie von außen betreibbar ist; siehe unten). Unter der Kommunikation mit der Fahrzeugelektronik wird insbesondere verstanden, dass die Fahrzeugelektronik eine weitere Funkschnittstelle als Empfangsschnittstelle (kurz: Empfänger) umfasst, welche die Kommunikation mit der Ausgangseinheit durchgeführt. Hierdurch kann die Ausgangseinheit ein Funksignal mit der Authentifizierungsinformation an die Funkschnittstelle der Fahrzeugelektronik übersenden, sodass die Fahrzeugelektronik die Authentifizierungsinformation empfangen und/oder zur Authentifizierung auswerten kann. Bspw. kann dabei die Empfangsleistung der Funkschnittstelle der Fahrzeugelektronik, also der Empfangsschnittstelle, an die Ausgangseinheit angepasst sein, insbesondere derart angepasst sein, dass ausschließlich ein Funksignal mit einer maximalen Entfernung im Wesentlichen von der Entfernung der Ausgangseinheit empfangbar ist. Hierdurch kann die Sicherheit erhöht werden, da dann nicht mehr parallel zur ersten Kommunikationstechnologie die zweite Kommunikationstechnologie durch einen ID-Geber genutzt werden kann.

Vorteilhafterweise kann die Eingangseinheit als eine RF- oder LF- oder HF-Schnittstelle oder Bluetooth-Schnittstelle, insbesondere Bluetooth-Low-Energy (BLE)-Schnittstelle oder NFC-Schnittstelle oder Mobilfunkschnittstelle oder WLAN Schnittstelle ausgebildet sein. Es können bei einem erfindungsgemäßen Adaptermodul ggf. auch mehrere Eingangseinheiten (und insbesondere auch mehrere Ausgangseinheiten) vorgesehen sein, welche Schnittstellen für unterschiedliche Kommunikationstechnologien, z. B. RF und/oder LF und/oder HF und/oder Bluetooth und/oder NFC und/oder Mobilfunk und/oder WLAN, aufweisen. Zum Beispiel umfasst das Adaptermodul eine erste Eingangseinheit (z. B. mit einer NFC Schnittstelle) und eine zweite Eingangseinheit (z. B. mit einer Bluetooth-Schnittstelle) für unterschiedliche erste Kommunikationstechnologien und eine (erste) Ausgangseinheit (z. B. mit einer LF Schnittstelle) und/oder eine (zweite) Ausgangseinheit (z. B. mit einer HF Schnittstelle), welche ggf. ebenfalls unterschiedliche zweite Kommunikationstechnologien unterstützen. Dies ermöglicht es gemäß dem angeführten Beispiel, flexibel für Fahrzeuge mit zweiten Kommunikationstechnologien (z. B. LF- und/oder HF-Authentifizierungsmechanismus) erste Kommunikationstechnologien (bspw. NFC- und/oder Bluetooth-Authentifizierungsmechanismus) nachzurüsten.

Im Rahmen der Erfindung kann "Bluetooth" sich auch auf BLE beziehen, also konkret als BLE ausgeführt sein.

In einer weiteren Möglichkeit kann vorgesehen sein, dass die Eingangseinheit als eine passive Schnittstelle zur Energie- und Datenübertragung, vorzugsweise als passive NFC-Schnittstelle, ausgebildet ist, um die Authentifizierungsinformation über die Datenübertragung zu empfangen und die Energieversorgung des Adaptermoduls und/oder der Ausgangseinheit zumindest tlw. über die Energieübertragung herzustellen. Dabei kann bei einer passiven Schnittstelle auch eine Energie zur Energieversorgung übertragen werden, wodurch bspw. die Funktion der Ausgangseinheit erst aktiviert wird. Dies ermöglicht eine besonders energiesparende Bereitstellung des Authentifizierungsmechanismus.

Ein besonderer Vorteil ergibt sich ferner, wenn das Adaptermodul batterielos und/oder unverbunden mit (z. B. elektrisch isoliert oder galvanisch getrennt von) einem Batteriesystem des Fahrzeuges ausgeführt ist. Entsprechend kann das Fahrzeug nicht zur Energieversorgung des Adaptermoduls dienen. Daher kann z. B. eine Energieversorgung durch die Eingangseinheit für das Adaptermodul genutzt werden, welche eine Energieübertragung über den Empfang der Authentifizierungsinformation von einem Kommunikationsgerät bereitstellen kann. Somit wird der Aufwand zur Nachrüstung eines Fahrzeuges mit dem Adaptermodul deutlich reduziert, da nicht erst umständlich Kabel zur Energieversorgung mit dem Fahrzeug verbunden werden müssen. Alternativ oder zusätzlich ist es bei dem erfindungsgemäßen Adaptermodul nicht erforderlich, dass irgendeine nachträgliche Verkabelung mit dem Fahrzeug, insbesondere mit einem 12-Volt Bordnetz des Fahrzeuges und/oder mit einem Busnetz des Fahrzeuges, zur Nachrüstung des Fahrzeuges und Integration des Adaptermoduls in das Fahrzeug erfolgen muss. Entsprechend kann das Adaptermodul auch kabelschnittstellenlos ausgeführt sein, also vollständig ohne Schnittstellen zur kabelgebundenen Verbindung mit dem Fahrzeug. In anderen Worten kann die Ausgangseinheit die alleinige Schnittstelle zur Kommunikation mit dem Fahrzeug bilden.

Des Weiteren ist es im Rahmen der Erfindung optional möglich, dass das Adaptermodul als separat vom Fahrzeug ausgeführtes einzeln handhabbares Modul ausgebildet ist, um den Authentifizierungsmechanismus für das Fahrzeug nachzurüsten. Insbesondere wird dabei unter "einzeln handhabbar" verstanden, dass das Adaptermodul einzeln vom Fahrzeug entfernt werden kann, insbesondere lösbar mit dem Fahrzeug verbunden ist, bevorzugt ohne dass das Fahrzeug hinsichtlich seiner originären Funktionalität eingeschränkt wird. Somit wird der Vorteil erzielt, dass das Adaptermodul als Nachrüstsatz ausgebildet sein kann.

Vorteilhaft ist es darüber hinaus bei dem erfindungsgemäßen Adaptermodul, wenn die Ausgangseinheit mit einer Übertragungseinheit verbunden ist, um die Authentifizierungsinformation in das Funksignal zu übernehmen, wobei vorzugsweise das ausgesendete Funksignal an eine Fahrzeugelektronik übertragbar ist, wodurch eine Authentifizierung anhand der Authentifizierungsinformation durch die Fahrzeugelektronik durchführbar ist. Bspw. kann die Übertragungseinheit dazu ausgeführt sein, die empfangene Authentifizierungsinformation an die Ausgangseinheit zu übertragen. Hierzu kann die Übertragungseinheit wenigstens eine elektrische Leitung und/oder eine Leiterbahn und/oder einen Mikrocontroller und/oder eine Steckverbindung und/oder dergleichen umfassen. Auch kann es möglich sein, dass die Übertragungseinheit eine Umwandlungseinheit, z. B. einen integrierten Schaltkreis, umfasst, um die Authentifizierungsinformation an das Format der zweiten Kommunikationstechnologie anzupassen. Ebenfalls ist es denkbar, dass die Übertragungseinheit wenigstens eine kryptografische Elektronikeinheit aufweist, um eine Entschlüsselung und/oder erneute Verschlüsselung der Authentifizierungsinformation durchzuführen.

Es kann im Rahmen der Erfindung vorgesehen sein, dass eine elektrische Energieversorgungsanordnung vorgesehen ist, um die Energieversorgung des Adaptermoduls drahtlos bereitzustellen, vorzugsweise durch Verteilung einer induktiv an die Eingangseinheit übertragenen Energie. Bspw. umfasst die Energieversorgungsanordnung wenigstens einen Energiespeicher, wie einen Akkumulator und/oder einen Kondensator, zur Zwischenspeicherung der übertragenen Energie. Insbesondere kann das Adaptermodul darüber hinaus keinerlei Energiequelle aufweisen, insbesondere keine Batterie oder dergleichen.

Es kann vorgesehen sein, dass die Ausgangseinheit die Aussendung des Funksignals in Abhängigkeit von der empfangenen Authentifizierungsinformation durchführt. Hierzu kann die Ausgangseinheit die empfangene Authentifizierungsinformation bspw. unverändert über das Funksignal aussenden, sodass durch das Adaptermodul keinerlei inhaltliche Veränderung der empfangenen Authentifizierungsinformation erfolgt. In anderen Worten kann das Adaptermodul ohne "eigene Intelligenz" ausgestaltet sein, um den konstruktiven Aufwand möglichst zu verringern. Darüber hinaus kann auch die Sicherheit erhöht werden, da durch das Adaptermodul keine kryptografische Funktion zur Authentifizierung (wie eine Entschlüsselung der Authentifizierungsinformation) implementiert sein muss. Der weitere Sicherheitsablauf kann dann im Fahrzeug stattfinden, also durch die Fahrzeugelektronik. Sämtliche Kryptologie und Zugangscodes können dann nur im Kommunikationsgerät (ID-Geber) und/oder im Fahrzeug vorgesehen sein, sodass eine Manipulation des Adaptermoduls unkritisch ist.

Ebenfalls unter Schutz gestellt ist ein Türgriff, insbesondere Türaußengriff und/oder Heckklappengriff, für ein Fahrzeug, aufweisend:
- wenigstens eine Befestigungsanordnung zur Befestigung außen an dem Fahrzeug, sodass der Türgriff als Türaußengriff zum Öffnen einer Tür (auch Heckklappe) des Fahrzeuges ausgeführt ist,
- eine Adaptervorrichtung,
   wobei die Adaptervorrichtung (optional zusätzlich zum Adaptermodul) vorzugsweise umfasst:
- wenigstens eine Eingangseinheit zum Empfang einer Authentifizierungsinformation, um zumindest tlw. einen Authentifizierungsmechanismus über wenigstens eine erste Kommunikationstechnologie bereitzustellen,
- wenigstens eine Ausgangseinheit zur Aussendung wenigstens eines Funksignals über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren.

Damit bringt der erfindungsgemäße Türgriff die gleichen Vorteile mit sich, wie sie ausführlich mit Bezug auf ein erfindungsgemäßes Adaptermodul beschrieben worden sind. Zudem kann der Türgriff geeignet sein, gemäß einem erfindungsgemäßen Verfahren betreibbar zu sein. Der Türaußengriff kann dabei auch als ein Außengriff einer Heckklappe des Fahrzeuges ausgeführt sein.

Eine im Rahmen dieser Erfindung beschriebene Adaptervorrichtung kann vollständig als ein erfindungsgemäßes Adaptermodul ausgebildet sein oder teilweise Merkmale des Adaptermoduls ebenfalls aufweisen. Entsprechend können sämtliche Merkmale, welche im Zusammenhang mit einem erfindungsgemäßen Adaptermodul beschrieben worden sind, sich nachfolgend auch auf eine Adaptervorrichtung beziehen. Ferner kann das Adaptermodul (räumlich) und/oder die Adaptervorrichtung (räumlich) innerhalb des Türgriffs angeordnet sein, wodurch es gegen Umwelteinflüsse geschützt unterbringbar ist. Damit muss auch nur der Türgriff bei einem Wechsel des Systems bzw. des ID-Gebers ausgetauscht werden.

Vorteilhafterweise kann die Befestigungsanordnung wenigstens ein Befestigungsmittel umfassen, um eine form- und/oder kraftschlüssige Verbindung mit einem Gegenbefestigungsmittel des Fahrzeuges, insbesondere einer Tür, herzustellen. Bspw. umfasst die Befestigungsanordnung wenigstens eine strukturelle Anpassung, wie eine Ausnehmung, um eine Schraubverbindung herzustellen.

Es kann ferner möglich sein, dass die Adaptervorrichtung als ein erfindungsgemäßes Adaptermodul ausgebildet ist, und somit vorzugsweise zur Nachrüstung beim Fahrzeug geeignet ist. Wenn die Adaptervorrichtung als das Adaptermodul ausgebildet ist, handelt es sich bevorzugt um ein nachrüstbares, einzeln handhabbares Modul. Dagegen kann die Adaptervorrichtung alternativ auch als ein fest und/oder originär (z. B. im Türgriff) integriertes Elektroniksystem ggf. mit verteilten Elektronikkomponenten ausgebildet sein. Ein solches Elektroniksystem kann ggf. fester Bestandteil einer notwendigen Fahrzeugkomponente (wie des Türgriffs) sein, und somit nicht als ein separates Bauteil (und damit einzeln handhabbar) montierbar und/oder nachrüstbar sein.

Ebenfalls Gegenstand der Erfindung ist ein System, insbesondere Authentifizierungssystem und/oder Zugangssystem eines Fahrzeuges, bevorzugt passives oder aktives Zugangssystem, zur Aktivierung einer sicherheitsrelevanten Funktion eines Fahrzeuges.

Hierbei ist insbesondere vorgesehen, dass das System umfasst:
- ein mobiles Kommunikationsgerät, insbesondere ein ID-Geber, wie ein elektronischer Schlüssel und/oder ein Smartphone, zur Aussendung einer Authentifizierungsinformation,
- eine Adaptervorrichtung mit wenigstens einer Eingangseinheit zum Empfang der Authentifizierungsinformation, um zumindest tlw. einen Authentifizierungsmechanismus über wenigstens eine erste Kommunikationstechnologie bereitzustellen, und mit wenigstens einer Ausgangseinheit zur Aussendung wenigstens eines Funksignals über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren.
Damit bringt das erfindungsgemäße System die gleichen Vorteile mit sich, wie sie ausführlich mit Bezug auf ein erfindungsgemäßes Adaptermodul beschrieben worden sind. Zudem kann das System ein erfindungsgemäßes Adaptermodul als die Adaptervorrichtung aufweisen.

Es ist ferner denkbar, dass die Eingangseinheit und/oder die gesamte Adaptervorrichtung im Bereich eines Türgriffs und/oder einer Heckklappe und/oder hinter einer Kunststoffblende, insbesondere in einer Tür, des Fahrzeuges angeordnet und/oder befestigbar ist. Damit ist eine besonders platzsparende und für die Kommunikation geeignete Anordnung möglich.

Vorteilhafterweise kann im Rahmen der Erfindung vorgesehen sein, dass die Adaptervorrichtung als ein Adaptermodul zur Adaption des Authentifizierungsmechanismus an das Fahrzeug ausgeführt ist, und vorzugsweise fahrzeugseitig lösbar integrierbar ist. Die lösbare Integration kann dabei auch eine lösbare Befestigung umfasst, z. B. mittels Schrauben oder Clipsen oder dergleichen. Auch kann es möglich sein, dass die fahrzeugseitige Integration durch ein Austauschen eines bestehenden Türgriffs des Fahrzeuges gegen einen Türgriff mit dem Adaptermodul (in dem es vorzugsweise integriert ist) erfolgt.

Nach einer weiteren Möglichkeit kann vorgesehen sein, dass das mobile Kommunikationsgerät als ein Mobilfunkgerät, insbesondere Smartphone, ausgebildet ist, und bevorzugt eine Schnittstelleneinheit zur Aussendung der Authentifizierungsinformation mittels induktiver Kopplung umfasst. Bspw. ist die Schnittstelleneinheit als NFC-Schnittstelle oder RFID-Schnittstelle ausgebildet. Dies ermöglicht eine besonders einfache und sichere Authentifizierung.

Ein weiterer Vorteil kann im Rahmen der Erfindung erzielt werden, wenn das System eine Fahrzeugelektronik des Fahrzeuges aufweist, welche separat von der Adaptervorrichtung, insbesondere einem Adaptermodul, ausgeführt ist, wobei vorzugsweise die Adaptervorrichtung elektrisch isoliert, insbesondere galvanisch getrennt, von der Fahrzeugelektronik ausgebildet ist. Damit ist ein einfaches und zeitsparendes Nachrüsten möglich.

Weiter ist im Rahmen der Erfindung denkbar, dass ein Suchsystem zur Detektion einer Annäherung des Kommunikationsgeräts an das Suchsystem vorgesehen ist, vorzugsweise ein Bluetooth oder BLE (Bluetooth Low Energy) oder LF oder UWB (Ultrabreitband) oder optisches oder kapazitives oder induktives Suchsystem, bevorzugt zur Aktivierung der Eingangseinheit und/oder zur Aussendung eines Wecksignals an das Kommunikationsgerät bei erfolgreicher Detektion, wobei vorzugsweise das Suchsystem in das Fahrzeug integrierbar und/oder in das Adaptermodul integriert ist. Bspw. kann der Empfang des Wecksignals durch das Kommunikationsgerät initiieren, dass das Kommunikationsgerät die Authentifizierungsinformation aussendet. Ein kapazitives System umfasst dabei z. B. einen kapazitiven Annäherungssensor. Ein induktives System umfasst z. B. einen sog. LDC Sensor. Bspw. kann das Suchsystem in der Adaptervorrichtung, insbesondere im Adaptermodul, integriert sein, sodass auch die Annäherungsdetektion nachrüstbar ausgestaltet ist. Bevorzugt liegt dabei eine Reichweite ausgehend vom Fahrzeug, in welcher die Detektion des Kommunikationsgeräts erfolgt, im Bereich von 0,1 m bis 20 m, vorzugsweise 0,2 m bis 5 m, bevorzugt 0,4 m bis 0,8 m. Dabei kann das Kommunikationsgerät, insbesondere als ein Smartphone, ebenfalls die Kommunikationstechnologie des Suchsystems unterstützen. Zur Verifizierung der Annäherung und/oder der genannten Reichweite als maximale Reichweite kann ferner eine Abstandsermittlung durchgeführt werden, z. B. eine Time-of-Flight Auswertung. Hierzu kann ggf. auch die Kommunikationstechnologie und/oder die Eingangseinheit und/oder Ausgangseinheit der Adaptervorrichtung genutzt werden.

Ebenfalls Gegenstand der Erfindung ist ein Verfahren zur Aktivierung einer sicherheitsrelevanten Funktion eines Fahrzeuges. Hierbei ist vorgesehen, dass die nachfolgenden Schritte durchgeführt werden, vorzugsweise nacheinander oder in beliebiger Reihenfolge, wobei einzelne Schritte auch wiederholt werden können:
a) Empfangen einer Authentifizierungsinformation, insbesondere von einem mobilen Kommunikationsgerät, durch wenigstens eine Eingangseinheit, um zumindest tlw. einen Authentifizierungsmechanismus über eine erste Kommunikationstechnologie bereitzustellen,
b) Aussenden wenigstens eines Funksignals durch wenigstens eine Ausgangseinheit über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren, insbesondere dadurch, dass eine Übertragung der Authentifizierungsinformation über das Funksignal an eine Fahrzeugelektronik durchgeführt und damit eine Auswertung durch die Fahrzeugelektronik ermöglicht wird.
Damit bringt das erfindungsgemäße Verfahren die gleichen Vorteile mit sich, wie sie ausführlich mit Bezug auf ein erfindungsgemäßes Adaptermodul und/oder System und/oder einen erfindungsgemäßen Türgriff beschrieben worden sind. Zudem kann das Verfahren geeignet sein, ein erfindungsgemäßes Adaptermodul und/oder erfindungsgemäßes Systems und/oder erfindungsgemäßen Türgriff zu betreiben. Insbesondere umfasst das erfindungsgemäße Verfahren den Betrieb einer Adaptervorrichtung, welche zumindest die Eingangseinheit und die Ausgangseinheit aufweist.

Ein weiterer Vorteil im Rahmen der Erfindung ist erzielbar, wenn eine Energieübertragung von einem mobilen Kommunikationsgerät an die Eingangseinheit erfolgt, um die Energieversorgung des Adaptermoduls, vorzugsweise vollständig oder zumindest der Ausgangseinheit, bereitzustellen. Damit können Kosten und technischer Aufwand für die Integration eines Energiespeichers, wie einer Batterie, vermieden werden.

Ferner ist es denkbar, dass vor Schritt a) die nachfolgenden Schritte durchgeführt werden:
- Kryptografisches Absichern der Authentifizierungsinformation durch ein kryptografisches Verfahren, insbesondere zur Verschlüsselung und/oder zur Codebestimmung, vorzugsweise anhand einer Schlüsselinformation,
- Aussenden der abgesicherten Authentifizierungsinformation,
wobei bei Schritt b) das Funksignal die abgesicherte Authentifizierungsinformation umfasst, welche vorzugsweise durch eine Fahrzeugelektronik empfangen und anhand einer weiteren Schlüsselinformation entschlüsselt wird. In anderen Worten kann die abgesicherte Authentifizierungsinformation durch die Eingangseinheit empfangen, inhaltlich unverändert an die Ausgangseinheit (z. B. durch eine Übertragungseinheit) übertragen, und durch die Ausgangseinheit weiterhin abgesichert ausgesendet werden. Dies ermöglicht eine deutliche Steigerung der Sicherheit bei der Authentifizierung.

Es kann alternativ selbstverständlich möglich sein, dass nach Schritt a) und vor Schritt b) eine Entschlüsselung der Authentifizierungsinformation anhand einer zweiten Schlüsselinformation der Adaptervorrichtung erfolgt, und bei Schritt b) das Funksignal mit der entschlüsselten und/oder neu verschlüsselten Authentifizierungsinformation ausgesendet wird. Dies hat den Vorteil, dass auch ein Authentifizierungsmechanismus mit einer unterschiedlichen Verschlüsselung nachgerüstet werden kann.

Gemäß einer vorteilhaften Weiterbildung der Erfindung kann vorgesehen sein, dass ferner die nachfolgenden Schritte vorgesehen sind, welche insbesondere zeitlich nach Schritt b) durchgeführt werden, bevorzugt zeitlich nacheinander:
c) Empfangen des ausgesendeten Funksignals durch einen Empfänger des Fahrzeuges, welcher elektrisch mit einer Fahrzeugelektronik verbunden ist,
d) Durchführen einer Authentifizierung anhand des Funksignals, insbesondere anhand der Authentifizierungsinformation, durch die Fahrzeugelektronik,
e) Aktivieren der sicherheitsrelevanten Funktion in Abhängigkeit von einem Ergebnis der Authentifizierung durch die Fahrzeugelektronik.
Damit kann die Authentifizierung sicher und zuverlässig abgeschlossen werden.

Es ist ferner möglich, dass gemäß Schritt b) bzw. c) das Funksignal die Authentifizierungsinformation umfasst, und vorzugsweise der nachfolgende Schritt zur Durchführung einer Authentifizierung vorgesehen sind:
- Auswerten der Authentifizierungsinformation durch eine Fahrzeugelektronik, um in Abhängigkeit von einem Ergebnis der Authentifizierung die sicherheitsrelevante Funktion zu aktivieren.

Vorteilhaft ist es darüber hinaus, wenn im Rahmen der Erfindung eine separate Adaptervorrichtung die Eingangs- und Ausgangseinheit aufweist, und durch die Adaptervorrichtung eine drahtlose (also über Funk) Weiterleitung der empfangenen Authentifizierungsinformation an eine Fahrzeugelektronik durchgeführt wird, sodass vorzugsweise eine sicherheitsrelevante Auswertung der Authentifizierungsinformation zur Authentifizierung ausschließlich durch die Fahrzeugelektronik erfolgt, und bevorzugt die Fahrzeugelektronik eine Entschlüsselung der Authentifizierungsinformation anhand einer (im kryptografischen Sinne) geheimen Schlüsselinformation durchführt. Damit kann die Sicherheit weiter erhöht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: eine Seitenansicht eines Fahrzeuges und eine Darstellung eines erfindungsgemäßen Systems,
- Fig. 2: eine Darstellung eines Adaptermoduls,
- Fig. 3: eine Darstellung eines erfindungsgemäßen Türgriffs bei einem Fahrzeug in Draufsicht.

In den nachfolgenden Figuren werden für die gleichen technischen Merkmale auch von unterschiedlichen Ausführungsbeispielen die identischen Bezugszeichen verwendet.

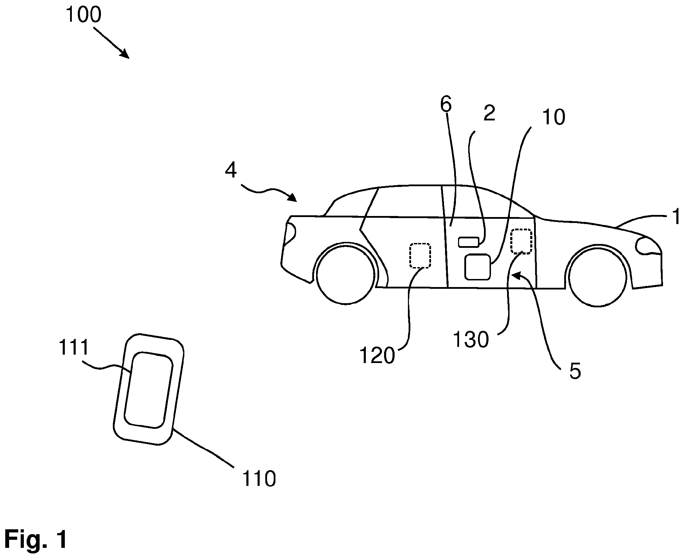

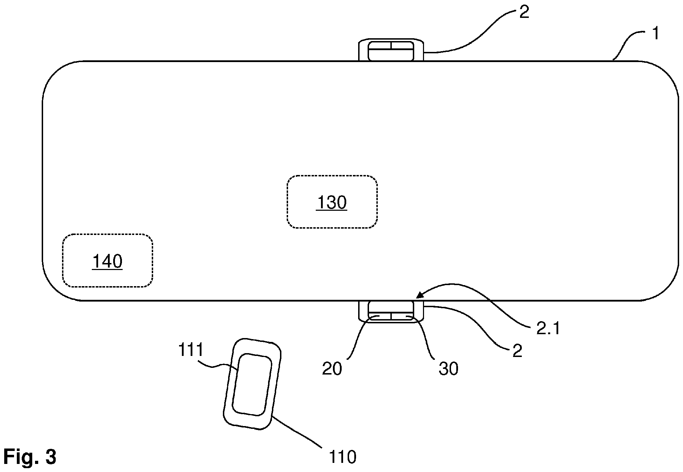

Figur 1 zeigt schematisch ein erfindungsgemäßes System 100, welches zumindest tlw. an einem Fahrzeug 1 befestigt, also z. B. als Nachrüstset integriert, sein kann. Das Fahrzeug 1 umfasst z. B. eine Tür 6 mit einem erfindungsgemäßen Türgriff 2 und/oder eine Heckklappe 4, welche ebenfalls einen erfindungsgemäßen Türgriff 2 aufweisen kann. Die erfindungsgemäßen Türgriffe 2 können sich dabei hinsichtlich ihrer geometrischen Ausbildung und/oder weiteren Komponenten voneinander unterscheiden, sodass bspw. ein Türgriff 2 an die Seitentür und ein weiterer Türgriff 2 an die Heckklappe angepasst ist. Alternativ oder zusätzlich kann ein erfindungsgemäßes Adaptermodul 10 im Türgriff 2 und/oder in der Tür 6, z. B. im Bereich oder hinter einer Kunststoffblende 5 der Tür 6, befestigt sein. Zur Befestigung kann eine Befestigungsanordnung 2.1 vorgesehen sein, welche z. B. in Figur 3 schematisch dargestellt ist.

Des Weiteren kann das erfindungsgemäße System 100 ein mobiles Kommunikationsgerät 110 aufweisen, welches zur Aktivierung einer sicherheitsrelevanten Fahrzeugfunktion dient. Eine hervorzuhebende Anwendung des Kommunikationsgeräts 110 ist die Nutzung als ID-Geber, um ein Schließsystem des Fahrzeuges 1 zu entriegeln. Hierzu kann das Kommunikationsgerät 110 manuell aktiv betätigt werden oder es kann eine Annäherung zur Entriegelung und/oder Authentifizierung ausreichen (bei einem passiven Zugangssystem des Fahrzeuges 1). Zur Detektion einer Annäherung ist z. B. ein Suchsystem 140 als Annäherungssensor des Fahrzeuges 1 vorgesehen, welches auch in Figur 3 dargestellt ist. In jedem Falle sollte vor der Aktivierung der sicherheitsrelevanten Fahrzeugfunktion, wie der Entriegelung, eine Authentifizierung des Kommunikationsgeräts 110 erfolgen.

Um anhand der Authentifizierung festzustellen, ob das Kommunikationsgerät 110 berechtigt ist, wird üblicherweise ein Authentifizierungsmechanismus des Fahrzeuges 1 bereitgestellt. Dieser umfasst insbesondere einen Datenaustausch zwischen dem Kommunikationsgerät 110 und dem Fahrzeug 1, um bspw. einen Code zu übertragen und durch eine Fahrzeugelektronik 120 auszuwerten. Hierzu kann eine Schnittstelleneinheit 111 des Kommunikationsgeräts 110 sowie ein Empfänger 130, insbesondere RF-Empfänger 130, des Fahrzeuges 1 genutzt werden. Problematisch ist es allerdings, wenn der Empfänger 130 nicht die Kommunikationstechnologie der Schnittstelleneinheit 111 unterstützt. So kann es möglich sein, dass aufgrund eines Austausches des Kommunikationsgeräts 110 die Schnittstelleneinheit 111 eine erste Kommunikationstechnologie und der Empfänger 130 eine zweite Kommunikationstechnologie (nicht jedoch die erste Kommunikationstechnologie) unterstützt.

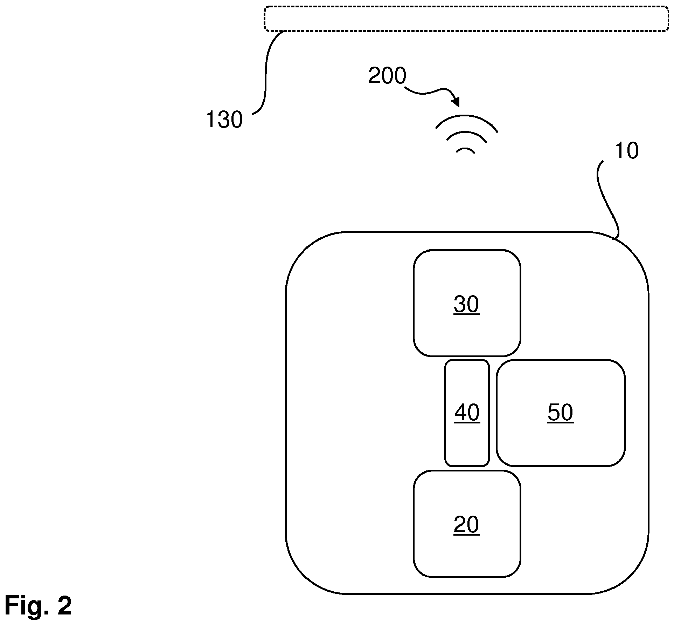

Erfindungsgemäß kann es daher vorgesehen sein, dass eine Nachrüstung eines Authentifizierungsmechanismus erfolgt, wie in Figur 2 näher dargestellt ist. Hierzu kann eine Adaptervorrichtung 10, insbesondere ein Adaptermodul 10, genutzt werden, welches eine Eingangseinheit 20 zum Empfang einer Authentifizierungsinformation aufweist, um zumindest tlw. den Authentifizierungsmechanismus über wenigstens eine erste Kommunikationstechnologie bereitzustellen. Weiter kann die Adaptervorrichtung 10 wenigstens eine Ausgangseinheit 30 zur Aussendung eines Funksignals 200 über eine zweite Kommunikationstechnologie in Abhängigkeit von der empfangenen Authentifizierungsinformation aufweisen, um die Aktivierung der sicherheitsrelevanten Funktion anhand des Authentifizierungsmechanismus zu initiieren. Hierbei kann sich die erste Kommunikationstechnologie von der zweiten Kommunikationstechnologie unterscheiden.

Weiter ist in Figur 2 dargestellt, dass die Ausgangseinheit 30 mit einer Übertragungseinheit 40 verbunden ist, um die Authentifizierungsinformation von der Eingangseinheit 20 in das Funksignal 200 zu übernehmen, wobei das ausgesendete Funksignal 200 über den Empfänger 130 des Fahrzeuges 1 an eine Fahrzeugelektronik 120 übertragen wird, wodurch eine Authentifizierung anhand der Authentifizierungsinformation durch die Fahrzeugelektronik 120 durchgeführt werden kann. Hierzu kann insbesondere eine kryptografische Auswertung der Authentifizierungsinformation durch die Fahrzeugelektronik 120 erfolgen. Die Fahrzeugelektronik 120 umfasst hierzu vorteilhafterweise zumindest ein Steuergerät des Fahrzeuges 1, welches bspw. über ein Bussystem des Fahrzeuges 1 mit dem Empfänger 130 verbunden ist.

Weiter kann vorgesehen sein, dass eine elektrische Energieversorgungsanordnung 50 vorgesehen ist, um die Energieversorgung des Adaptermoduls 10 drahtlos bereitzustellen, vorzugsweise durch Verteilung einer induktiv an die Eingangseinheit 20 übertragenen Energie. Hier ist es von Vorteil, wenn die Eingangseinheit 20 als NFC-Schnittstelle ausgeführt ist, vorzugsweise als rein passive ausgeführte NFC-Schnittstelle.

In Figur 3 ist die Integration der Adaptervorrichtung 10 in einen Türgriff 2 gezeigt. Dies ermöglicht die einfache Nachrüstung zur Adaptierung des Authentifizierungsmechanismus mit der ersten Kommunikationstechnologie an einen Authentifizierungsmechanismus mit der zweiten Kommunikationstechnologie des Fahrzeuges 1. Besonders vorteilhaft ist es, wenn zumindest die Eingangseinheit 20 und die Ausgangseinheit 30, vorteilhafterweise die gesamte Adaptervorrichtung 10, in den Türgriff 2 integriert ist. Hierzu kann die Adaptervorrichtung 10 vollständig von einem Gehäuse des Türgriffs 2 umgeben und/oder zumindest vom Außenbereich des Fahrzeuges 1 durch das Gehäuse getrennt sein. Dies ermöglicht eine mechanisch sichere Integration in das Fahrzeug 1. Auch kann der Türgriff 2 austauschbar sein. Da hauptsächlich die Ausgangseinheit 30 mit einer Funkschnittstelle genutzt wird, kann bevorzugt auf eine Verbindung der Adaptervorrichtung 10 (auch des Adaptermoduls 10) über elektrisch leitende Verbindungen mit der Fahrzeugelektronik 120 verzichtet werden. Alternativ kann wenigstens eine Kabelverbindung genutzt werden, z. B. für eine Verbindung mit einem Suchsystem 140 des Fahrzeuges 1.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Türgriff
- 2.1: Befestigungsanordnung
- 4: Heckklappe
- 5: Kunststoffblende
- 6: Tür

- 10: Adaptermodul, Adaptervorrichtung

- 20: Eingangseinheit, z. B. NFC-Schnittstelle/BLE/etc.

- 30: Ausgangseinheit, RF-Sendeeinheit

- 40: Übertragungseinheit

- 50: Energieversorgungsanordnung

- 100: System
- 110: Kommunikationsgerät
- 111: Schnittstelleneinheit

- 120: Fahrzeugelektronik
- 130: Empfänger, RF-Empfänger

- 140: Suchsystem

- 200: Funksignal

## Patentansprüche

1. Adaptermodul (10) für ein Fahrzeug (1) zur Aktivierung einer sicherheitsrelevanten Funktion des Fahrzeuges (1), aufweisend:
- wenigstens eine Eingangseinheit (20) zum Empfang einer Authentifizierungsinformation, um zumindest teilweise einen Authentifizierungsmechanismus über eine erste Kommunikationstechnologie bereitzustellen,
- wenigstens eine Ausgangseinheit (30) zur Aussendung wenigstens eines Funksignals (200) über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren,
wobei sich die erste Kommunikationstechnologie von der zweiten Kommunikationstechnologie unterscheidet.

2. Adaptermodul (10) nach Anspruch 1,
**dadurch gekennzeichnet,**
**dass** die Eingangseinheit (20) als NFC-Schnittstelle zur Kommunikation mit einem mobilen Kommunikationsgerät (110) und die Ausgangseinheit (30) als RF-Funkschnittstelle zur Kommunikation mit einer Fahrzeugelektronik (120) ausgebildet ist und/oder dass die Eingangseinheit (20) als eine passive Schnittstelle zur Energie- und Datenübertragung, vorzugsweise als passive NFC-Schnittstelle, ausgebildet ist, um die Authentifizierungsinformation über die Datenübertragung zu empfangen und die Energieversorgung des Adaptermoduls (10) zumindest teilweise über die Energieübertragung herzustellen.

3. Adaptermodul (10) nach einem der vorhergehenden Ansprüche,
**dadurch gekennzeichnet,**
**dass** das Adaptermodul (10) als separat vom Fahrzeug (1) ausgeführtes einzeln handhabbares Modul ausgebildet ist, um den Authentifizierungsmechanismus für das Fahrzeug (1) nachzurüsten
und/oder dass die Ausgangseinheit (30) mit einer Übertragungseinheit (40) verbunden ist, um die Authentifizierungsinformation in das Funksignal (200) zu übernehmen, wobei das ausgesendete Funksignal (200) an eine Fahrzeugelektronik (120) übertragbar ist, wodurch eine Authentifizierung anhand der Authentifizierungsinformation durch die Fahrzeugelektronik (120) durchführbar ist.

4. Adaptermodul (10) nach einem der vorhergehenden Ansprüche,
**dadurch gekennzeichnet,**
**dass** eine elektrische Energieversorgungsanordnung (50) vorgesehen ist, um die Energieversorgung des Adaptermoduls (10) drahtlos bereitzustellen, vorzugsweise durch Verteilung einer induktiv an die Eingangseinheit (20) übertragenen Energie.

5. Türgriff (2) für ein Fahrzeug, aufweisend:
- wenigstens eine Befestigungsanordnung (2.1) zur Befestigung außen an dem Fahrzeug (1), sodass der Türgriff (2) als Türaußengriff zum Öffnen einer Tür (6) des Fahrzeuges (1) ausgeführt ist,
- eine Adaptervorrichtung (10),
wobei die Adaptervorrichtung (10) ferner umfasst:
- wenigstens eine Eingangseinheit (20) zum Empfang einer Authentifizierungsinformation, um zumindest teilweise einen Authentifizierungsmechanismus über eine erste Kommunikationstechnologie bereitzustellen,
- wenigstens eine Ausgangseinheit (30) zur Aussendung wenigstens eines Funksignals (200) über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren
und/oder dass die Adaptervorrichtung (10) als ein Adaptermodul (10) nach einem der vorhergehenden Ansprüche ausgebildet ist.

6. System (100) zur Aktivierung einer sicherheitsrelevanten Funktion eines Fahrzeuges (1), aufweisend:
- ein mobiles Kommunikationsgerät (110) zur Aussendung einer Authentifizierungsinformation,
- eine Adaptervorrichtung (10) mit einer Eingangseinheit (20) zum Empfang der Authentifizierungsinformation, um zumindest teilweise einen Authentifizierungsmechanismus über eine erste Kommunikationstechnologie bereitzustellen, und mit wenigstens einer Ausgangseinheit (30) zur Aussendung wenigstens eines Funksignals (200) über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren.

7. System (100) nach einem der vorhergehenden Ansprüche,
**dadurch gekennzeichnet,**
**dass** die Eingangseinheit (20) und/oder die gesamte Adaptervorrichtung (10) im Bereich eines Türgriffs (2) und/oder einer Heckklappe (4) und/oder hinter einer Kunststoffblende (5), insbesondere in einer Tür (6), des Fahrzeuges (1) angeordnet und/oder befestigbar ist
und/oder dass die Adaptervorrichtung (10) als ein Adaptermodul (10) zur Adaption des Authentifizierungsmechanismus an das Fahrzeug (1) ausgeführt ist, und vorzugsweise fahrzeugseitig lösbar integrierbar ist.

8. System (100) nach einem der vorhergehenden Ansprüche,
**dadurch gekennzeichnet,**
**dass** das mobile Kommunikationsgerät (110) als ein Smartphone ausgebildet ist, und bevorzugt eine Schnittstelleneinheit (111) zur Aussendung der Authentifizierungsinformation mittels induktiver Kopplung umfasst.

9. System (100) nach einem der vorhergehenden Ansprüche,
**dadurch gekennzeichnet,**
**dass** das System (100) eine Fahrzeugelektronik (120) des Fahrzeuges (1) aufweist, welche separat von der Adaptervorrichtung (10), insbesondere einem Adaptermodul (10), ausgeführt ist, wobei die Adaptervorrichtung (10) elektrisch isoliert, insbesondere galvanisch getrennt, von der Fahrzeugelektronik (120) ausgebildet ist und/oder dass ein Suchsystem (140) zur Detektion einer Annäherung des Kommunikationsgeräts (110) an das Suchsystem (140) vorgesehen ist, vorzugsweise ein Bluetooth oder BLE oder LF oder UWB oder optisches oder kapazitives oder induktives Suchsystem (140), bevorzugt zur Aktivierung der Eingangseinheit (20) und/oder zur Aussendung eines Wecksignals an das Kommunikationsgerät (110) bei erfolgreicher Detektion, wobei vorzugsweise das Suchsystem (140) in das Fahrzeug (1) integrierbar und/oder in das Adaptermodul (10) integriert ist.

10. System (100) nach einem der vorhergehenden Ansprüche,
**dadurch gekennzeichnet,**
**dass** die Adaptervorrichtung (10) als ein Adaptermodul (10) nach einem der vorhergehenden Ansprüche ausgebildet ist.

11. Verfahren zur Aktivierung einer sicherheitsrelevanten Funktion eines Fahrzeuges (1), aufweisend die nachfolgenden Schritte:
a) Empfangen einer Authentifizierungsinformation durch wenigstens eine Eingangseinheit (20), um zumindest teilweise einen Authentifizierungsmechanismus über eine erste Kommunikationstechnologie bereitzustellen,
b) Aussenden wenigstens eines Funksignals (200) durch wenigstens eine Ausgangseinheit (30) über wenigstens eine zweite Kommunikationstechnologie in Abhängigkeit von der empfangenen Authentifizierungsinformation, um die Aktivierung der sicherheitsrelevanten Funktion anhand des Authentifizierungsmechanismus zu initiieren.

12. Verfahren nach einem der vorhergehenden Ansprüche,
**dadurch gekennzeichnet,**
**dass** eine Energieübertragung von einem mobilen Kommunikationsgerät (110) an die Eingangseinheit (20) erfolgt, um die Energieversorgung des Adaptermoduls (10), vorzugsweise vollständig oder zumindest der Ausgangseinheit (30), bereitzustellen.

13. Verfahren nach einem der vorhergehenden Ansprüche,
**dadurch gekennzeichnet,**
**dass** vor Schritt a) die nachfolgenden Schritte durchgeführt werden:
- Kryptografisches Absichern der Authentifizierungsinformation durch ein kryptografisches Verfahren, insbesondere zur Verschlüsselung und/oder zur Codebestimmung, vorzugsweise anhand einer Schlüsselinformation,
- Aussenden der abgesicherten Authentifizierungsinformation,
wobei bei Schritt b) das Funksignal (200) die abgesicherte Authentifizierungsinformation umfasst, welche vorzugsweise durch eine Fahrzeugelektronik (120) empfangen und anhand einer weiteren Schlüsselinformation entschlüsselt wird.

14. Verfahren nach einem der vorhergehenden Ansprüche,
**dadurch gekennzeichnet,**
**dass** ferner die nachfolgenden Schritte vorgesehen sind, welche insbesondere zeitlich nach Schritt b) durchgeführt werden, bevorzugt zeitlich nacheinander:
c) Empfangen des ausgesendeten Funksignals (200) durch einen Empfänger (130) des Fahrzeuges (1), welcher elektrisch mit einer Fahrzeugelektronik (120) verbunden ist,
d) Durchführen einer Authentifizierung anhand des Funksignals (200), insbesondere anhand der Authentifizierungsinformation, durch die Fahrzeugelektronik (120),
e) Aktivieren der sicherheitsrelevanten Funktion in Abhängigkeit von einem Ergebnis der Authentifizierung durch die Fahrzeugelektronik (120).

15. Verfahren nach einem der vorhergehenden Ansprüche,
**dadurch gekennzeichnet,**
**dass** eine separate Adaptervorrichtung (10) die Eingangs- und Ausgangseinheit (20, 30) aufweist, und durch die Adaptervorrichtung (10) eine drahtlose Weiterleitung der empfangenen Authentifizierungsinformation an eine Fahrzeugelektronik (120) durchgeführt wird, sodass vorzugsweise eine sicherheitsrelevante Auswertung der Authentifizierungsinformation zur Authentifizierung ausschließlich durch die Fahrzeugelektronik (120) erfolgt, und bevorzugt die Fahrzeugelektronik (120) eine Entschlüsselung der Authentifizierungsinformation anhand einer Schlüsselinformation durchführt
und/oder dass eine separate Adaptervorrichtung (10) die Eingangs- und Ausgangseinheit (30) aufweist, welche als ein Adaptermodul (10) nach einem der vorhergehenden Ansprüche ausgebildet ist, und/oder dass ein System (100) und/oder Türgriff (2) nach einem der vorhergehenden Ansprüche betrieben wird.
